# EUROPÄISCHE PATENTSCHRIFT

(11) **EP 0 707 691 B1**
(45) Veröffentlichungstag und Bekanntmachung des Hinweises auf die Patenterteilung: **22.04.1998**
(21) Anmeldenummer: 94907549.3
(22) Anmeldetag: 11.02.1994
(51) Int. Cl.: F16D 3/78, F16B 21/20

(54) **GELENKSCHEIBE, INSBESONDERE FÜR DEN ANTRIEBSSTRANG IN KRAFTFAHRZEUGEN**
RUBBER UNIVERSAL JOINT DISC, ESPECIALLY FOR THE DRIVE TRAIN IN MOTOR VEHICLES
DISQUE DE JOINT FLECTOR, NOTAMMENT POUR CHAINE CINEMATIQUE DE VEHICULES AUTOMOBILES

(30) Priorität: 12.02.1993 DE 4304274
(43) Veröffentlichungstag der Anmeldung: 24.04.1996
(73) Patentinhaber: SGF SÜDDEUTSCHE GELENKSCHEIBENFABRIK GMBH & CO. KG., 84478 Waldkraiburg (DE)
(72) Erfinder: WÄHLING, Werner, D-84559 Kraiburg a. Inn (DE); MAIERBACHER, Georg, D-83527 Kirchdorf b. Haag (DE)
(74) Vertreter: Goetz, Rupert, Dipl.-Ing.
(86) Internationale Anmeldenummer: EP9400396
(87) Internationale Veröffentlichungsnummer: WO9418467

(56) Entgegenhaltungen:
- DE-B- 1 021 212
- DE-B- 1 040 854
- DE-C- 936 548
- DE-C- 3 942 432
- FR-A- 837 975
- FR-A- 2 338 411
- US-A- 3 032 807

## Beschreibung

Die Erfindung betrifft eine Gelenkscheibe nach dem Oberbegriff des Anspruchs 1.

Eine solche Gelenkscheibe ist beispielsweise aus der DE 3942432 C1 bekannt. Dort haben die Stützringe ein L-förmiges Profil; sie haben je einen zylindrischen Abschnitt, der mit Preßsitz auf die zugehörige Buchse aufgepreßt ist, und von dessen in bezug auf die Buchse axial innerem Ende ein Flansch im wesentlichen radial nach außen ragt. Die zylindrischen Abschnitte müssen, um einen sicheren Preßsitz zu gewährleisten, verhältnismäßig lang sein, so daß jeder Stützring ungefähr ein Zehntel der Gesamtlänge der zugehörigen Buchse beansprucht. Infolgedessen ist der Raum, der zwischen zwei Stützringen auf einer Buchse freibleibt, um Schlingenpakete aufzunehmen, in axialer Richtung erheblich kürzer als die Buchse. Man hat es bisher für erforderlich gehalten, axial außerhalb der Schlingenpakete und der Flansche der Stützringe eine dicke Schicht aus dem gummielastischen Material vorzusehen, das den Scheibenkörper bildet. Unter anderem aus diesem Grund hat man die Stützringe mit axial innenliegendem Flansch auf den Buchsen angeordnet.

Die Erfindung beruht auf der Erkenntnis, daß sich ein ausreichender Schutz der Schlingenpakete und ein sicherer Zusammenhalt einer Gelenkscheibe der eingangs beschriebenen Gattung auch dann erzielen läßt, wenn die Schlingenpakete an den beiden Stirnseiten der Gelenkscheibe nur mit einer verhältnismäßig dünnen Schicht aus gummielastischem Material überzogen sind; die Dicke dieser Schicht braucht grundsätzlich nicht größer zu sein als die Dicke des zum Herstellen der Stützringe bisher verwendeten Blechs, also beispielsweise 0,4 bis 0,6 mm.

Ausgehend von dieser Erkenntnis liegt der Erfindung die Aufgabe zugrunde, bei gegebener Gesamtdicke einer Gelenkscheibe der beschriebenen Gattung einen in axialer Richtung der Buchsen möglichst großen Bauraum für Schlingenpakete zur Verfügung zu stellen.

Die Aufgabe ist erfindungsgemäß mit den Merkmalen des Anspruchs 1 gelöst.

Die erfindungsgemäßen Stützringe sind vorzugsweise aus Federbandstahl mit einer Dicke von 0,4 bis 1,0 mm ausgestanzt, gehärtet und angelassen. Um zu gewährleisten, daß die Zähne eines Stützrings der erfindungsgemäß verwendeten Art sich zuverlässig auf einer Buchse festkrallen, genügt es, einen solchen Stützring etwa 1,5 bis 2 mm weit axial auf die Buchse aufzuschieben.

Bei einer bevorzugten Ausführungsform der Erfindung weist die Ringscheibe zwischen den Zähnen Führungsabschnitte auf, an denen ihr Innendurchmesser ebenso groß oder geringfügig größer ist wie der Außendurchmesser der zugehörigen Buchse. Die Führungsabschnitte zentrieren die Ringscheibe, und somit den gesamten Stützring, auf der Buchse, ohne deren Oberfläche zu zerkratzen. Eine in üblicher Weise vorgesehene Beschichtung der äußeren Oberfläche der Buchse wird somit höchstens von den Zähnen beschädigt, bleibt aber im übrigen erhalten.

Es ist ferner zweckmäßig, wenn die Ringscheibe beiderseits jedes Zahns je eine Aussparung aufweist, deren Breite ungefähr so groß wie die Breite des Zahns ist. Durch diese Aussparungen läßt sich beim Herstellen des Scheibenkörpers gummielastisches Material einspritzen und eingeschlossene Luft verdrängen; in den Aussparungen bilden sich somit Brücken aus dem gummielastischen Material, die eine axial außerhalb der Stützringe vorgesehene Schicht aus diesem Material fest mit dem axial inneren Bereich des Scheibenkörpers verbinden und eine Ablösung der äußeren Schicht im Betrieb auch dann vermeiden, wenn diese Schicht nur sehr dünn ist.

Die gemäß Anspruch 4 vorgesehenen Stützlappen übergreifen die zugehörigen Schlingenpakete derart, daß selbst bei extremen Beanspruchungen der Gelenkscheibe Schlingenpakete, die einander benachbarte Buchsen umschlingen, nicht aneinander scheuern können, auch wenn sie schon im unbelasteten Zustand nur einen geringen Abstand in Umfangsrichtung der Gelenkscheibe voneinander haben. Die erfindungsgemäße Gestaltung der Stützringe ermöglicht es also, den Bauraum rings um jede Buchse auch in radialer Richtung besonders gut zu nutzen.

Ein Ausführungsbeispiel der Erfindung wird im folgenden anhand schematischer Zeichnungen mit weiteren Einzelheiten erläutert. Es zeigen:
- Fig. 1: eine Draufsicht einer teilweise aufgebrochenen erfindungsgemäßen Gelenkscheibe,
- Fig. 2: die teilweise als Schnitt gezeichnete Seitenansicht II-II in Fig. 1,
- Fig. 3: einen vergrößerten Ausschnitt aus Fig. 1,
- Fig. 4: die Ansicht in Richtung des Pfeils IV in Fig. 3, und
- Fig. 5: eine Baugruppe der Gelenkscheibe in perspektivischer Ansicht.

Die dargestellte Gelenkscheibe ist um eine Drehachse A drehbar und hat einen Scheibenkörper 10 von abgerundet-sechseckigem Umriß, der aus Gummi besteht und eine zentrale Aussparung 12 aufweist. In den Scheibenkörper 10 sind sechs zylindrische Buchsen 14 aus Stahl eingebettet, die paarweise von Schlingenpaketen 16 und 18 umschlungen sind. Die Schlingenpakete 16 und 18 auf jeder der Buchsen 14 sind durch ein Paar Stützringe 20 zusammengehalten, die auf je ein Ende jeder Buchse 14 aufgeschoben sind.

Die Stützringe 20 bestehen aus Federbandstahl und haben als Hauptbestandteil je eine Ringscheibe 22, an deren radial innerem Rand Zähne 24, Führungsabschnitte 26 und Aussparungen 28 ausgebildet sind. Im dargestelltem Beispiel weist jede Ringscheibe 22 sechs Zähne 24, sechs Führungsabschnitte 26 und zwölf Aussparungen 28 auf; zwischen jedem Zahn 24 und jedem der benachbarten Führungsabschnitte 26 ist eine Aussparung 28 angeordnet. An den Führungsabschnitten 26 gemessen, hat die Ringscheibe 22 einen Innendurchmesser D, der mindestens so groß und bis zu 0,2 mm größer ist als der Außendurchmesser der zugehörigen Buchse 14. Im dargestellten Beispiel sind alle Buchsen 14 und somit auch alle Stützringe 20 gleich.

Der an den Zähnen 24 gemessene Innendurchmesser d jeder Ringscheibe 22 ist so bemessen, daß die Zähne 24 sich beim Aufpressen des Stützrings 20 auf eine Buchse 14 leicht schräg stellen und sich mit einer scharfen Stanzkante an der Buchse verkrallen. Der Gegendruck der Schlingenpakete 16 und 18 sorgt dafür, daß zwischen den Zähnen 24 und der Buchse 14 Radialkräfte entstehen, die größer sind als die durch elastische Rückstellkräfte der Zähne 24 hervorgerufenen Radialkräfte.

Vom äußeren Rand der Ringscheibe 22 jedes Stützrings 20 ragen parallel zur zugehörigen Buchse 14 zwei Stützlappen 30 weg, die je einen sich über 45° erstreckenden Abschnitt eines Zylindermantels darstellen. Die beiden Stützlappen 30 sind um 120° gegeneinander versetzt, so daß zwischen ihnen zwei von Stützlappen freie Abschnitte 32 und 34 freibleiben, die sich über 195° bzw. 75° erstrecken. Wenn anstatt der dargestellten insgesamt sechs Buchsen 14 acht solche Buchsen vorgesehen sind, ändern sich die Winkel entsprechend. In jedem Fall greifen die Stützlappen 30 derart über ein Schlingenpaket 16 bzw. 18 hinweg in das benachbarte Schlingenpaket 18 bzw. 16 ein, daß die Schlingenpakete vor Berührung mit Stützringen 20 auf benachbarten Buchsen 14 geschützt sind. Die freien Abschnitte 32 und 34 sind breit genug, um unter allen Umständen zu verhindern, daß die Schlingenpakete 16 und 18 eine Kante eines Stützlappens 30 berühren.

Wie vor allem aus Fig. 5 ersichtlich, ist auf jedes Ende jeder Buchse 14 ein Stützring 20 derart aufgepreßt, daß die Stützlappen 30 der beiden auf einer Buchse 14 angeordneten Stützringe 20 einander zugewandt sind. Die axiale Länge der Stützlappen 30 ist so bemessen, daß die einander paarweise zugewandten Stützlappen sich auch bei der stärksten im Betrieb möglichen Verformung der Gelenkscheibe nicht berühren. Die Stützringe 20 sind jedoch mit solcher Kraft auf die Buchsen 14 aufgepreßt, daß die Schlingenpakete 16 und 18 dicht zusammengehalten werden.

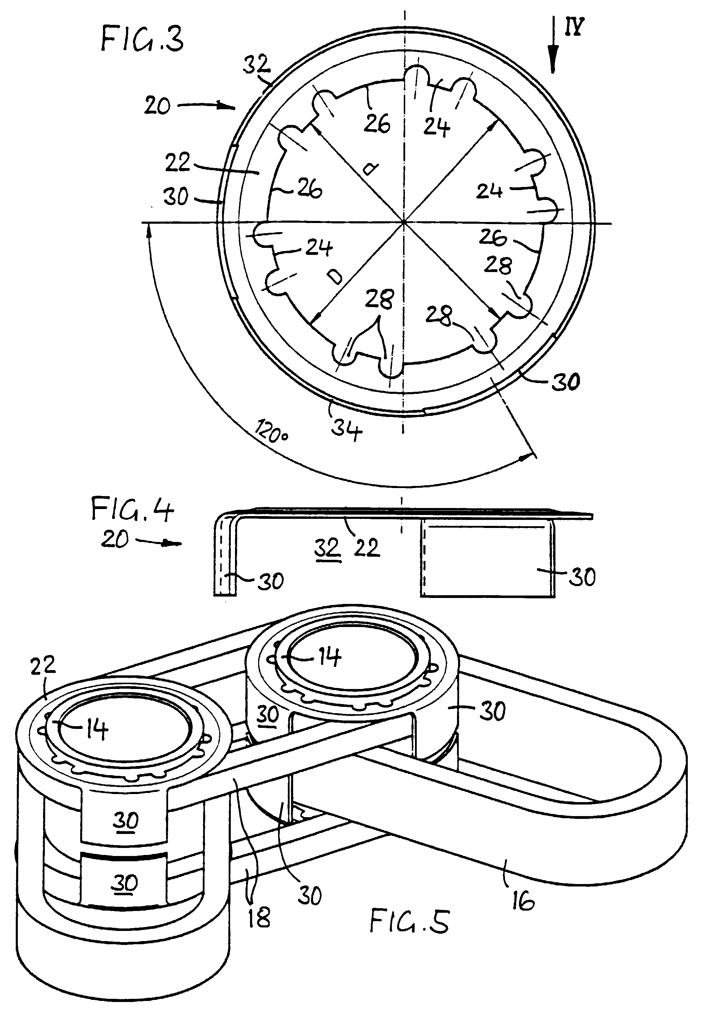

Die Aussparungen 28 sind, wie vor allem aus Fig. 3 ersichtlich ist, ungefähr gleich breit wie die Zähne 24, sodaß der zum Herstellen des Scheibenkörpers 10 verwendete Gummi, in den die Buchsen 14, die Schlingenpakete 16 und 18 sowie die Stützringe 20 eingebettet werden, ohne nennenswerte Behinderung durch die Aussparungen 28 hindurchfließen kann. Aus Fig. 2 ist ersichtlich, daß der Gummi des Scheibenkörpers 10 auch die axial äußeren Stirnflächen der Ringscheiben 22 abdeckt.

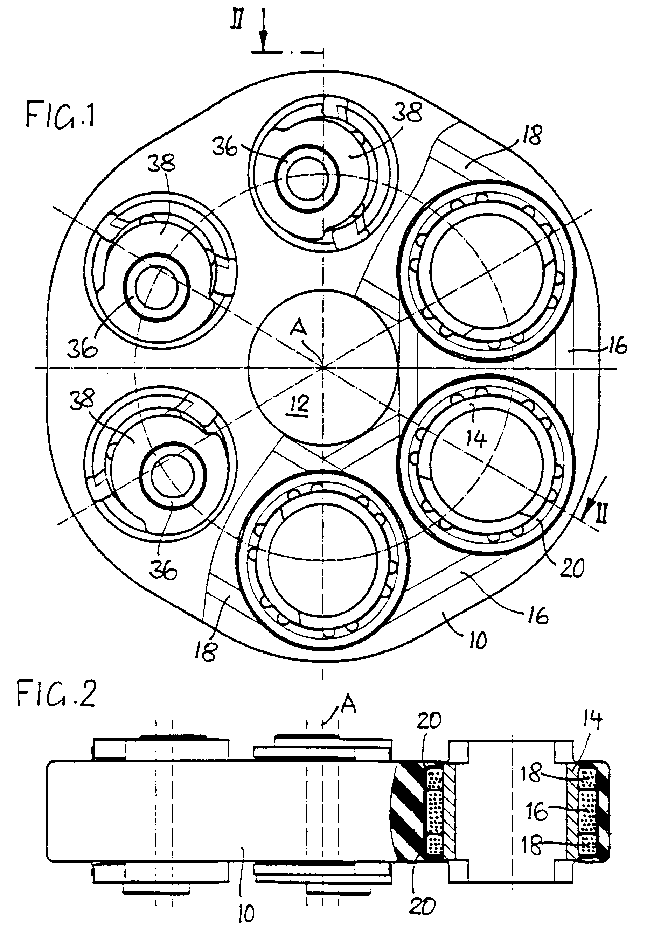

Der Vollständigkeit halber sind im linken, nicht aufgebrochenen Teil der Fig. 1 Innenbuchsen 36 dargestellt, die ebenfalls aus Stahl bestehen und exzentrisch in je eine der von den Schlingenpaketen 16 und 18 umschlungenen Buchsen 14 eingesetzt sind.

Ein Teil des Zwischenraums zwischen jeder Innenbuchse 36 und der zugehörigen äußeren Buchse 14 ist in üblicher Weise von einem Gummikörper 38 ausgefüllt. Die Innenbuchsen 36 sind dazu bestimmt, je einen Befestigungsbolzen aufzunehmen. Solche Innenbuchsen 36 sind jedoch nicht in jedem Fall erforderlich; vor allem bei kleineren Gelenkscheiben werden Befestigungsbolzen unmittelbar durch die von den Schlingenpaketen 16 und 18 umschlungenen Buchsen 14 hindurchgesteckt.

## Patentansprüche

1. Gelenkscheibe, insbesondere für den Antriebsstrang von Kraftfahrzeugen, mit
- einem Scheibenkörper (10) aus gummielastischem Material, der eine zentrale Drehachse (A) aufweist,
- mehreren Buchsen (14), die in Abständen voneinander rings um die Drehachse (A) angeordnet sind,
- Schlingenpaketen (16, 18) aus die Buchsen (14) paarweise umschlingenden Fadenschlingen, und
- Stützringen (20), die axial auf die Buchsen (14) aufgeschoben sind und die Schlingenpakete (16, 18) axial zusammenhalten,
dadurch **gekennzeichnet**, daß die Stützringe (20) je eine Ringscheibe (22) mit radial nach innen vorspringenden, sich auf der zugehörigen Buchse (14) festkrallenden Zähnen (24) aufweisen.

2. Gelenkscheibe nach Anspruch 1,
dadurch **gekennzeichnet**, daß die Ringscheiben (22) zwischen den Zähnen (24) Führungsabschnitte (26) aufweisen, an denen ihr Innendurchmesser (D) mindestens ebenso groß ist wie der Außendurchmesser der zugehörigen Buchse (14).

3. Gelenkscheibe nach Anspruch 1 oder 2,
dadurch **gekennzeichnet**, daß jede Ringscheibe (22) beiderseits jedes Zahns (24) je eine Aussparung (28) aufweist, deren Breite (b28) ungefähr so groß wie die Breite (b24) des Zahns (24) ist.

4. Gelenkscheibe nach einem der Ansprüche 1 bis 3,
dadurch **gekennzeichnet**, daß vom radial äußeren Rand jeder Ringscheibe (22) ungefähr parallel zur zugehörigen Buchse (14) zwei Stützlappen (30) wegragen, die je einer benachbarten Buchse (14) zugewandt sind.

## Claims

1. A flexible disc, especially for use in the driving line of motor vehicles, comprising
- a disc body (10) made of rubber-elastic material and having a central axis of rotation (A),
- a plurality of bushings (14) arranged spaced from one another around the axis of rotation (A),
- loop sets (16, 18) consisting of string loops wrapped around the bushings (14) in pairs, and
- supporting rings (20) slipped axially on the bushings (14) to keep the loop sets (16, 18) together axially,
characterized in that the supporting rings (20) each comprise an annular disc (22) having teeth (24) which project radially inwardly and anchor firmly on the corresponding bushing (14).

2. The flexible disc as claimed in claim 1, characterized in that the annular discs (22) are formed between the teeth (24) with guide sections (26) at which the disc inner diameter (D) is at least as great as the outer diameter of the corresponding bushings (14).

3. The flexible disc as claimed in claim 1 or 2, characterized in that each annular disc (22) is formed at both sides of each tooth (24) with one recess (28) each, the width (b28) of which is approximately the same as the width (b24) of the tooth (24).

4. The flexible disc as claimed in any one of claims 1 to 3, characterized in that two supporting lobes (30) project from the radially outer edge of each annular disc (22) approximately parallel to the corresponding bushings (14), each lobe (30) facing an adjacent bushing (14).

## Revendications

1. Disque articulé, en particulier pour le train d'entraînement de véhicules automobiles, comprenant :
- un corps de disque (10) en un matériau présentant l'élasticité du caoutchouc, qui présente un axe de rotation central (A),
- plusieurs douilles (14) qui sont agencées à distance les unes des autres autour de l'axe de rotation (A),
- des groupes de spires (16, 18) constitués par des spires de fil entourant par paire les douilles (14),
- des anneaux de support (20) qui sont enfilés axialement sur les douilles (14) et qui maintiennent axialement assemblés les groupes de spires (16, 18),
caractérisé en ce que les anneaux de support (20) présentent un disque annulaire respectif (22) présentant des dents (24) qui font saillie radialement vers l'intérieur et qui se bloquent "en mordant" sur la douille associée (14).

2. Disque articulé selon la revendication 1, caractérisé en ce que les disques annulaires (22) présentent entre les dents (24) des tronçons de guidage (26) au niveau desquels leur diamètre intérieur (D) est au moins aussi grand que le diamètre extérieur de la douille associée (14).

3. Disque articulé selon l'une ou l'autre des revendications 1 et 2, caractérisé en ce que chaque disque annulaire (22) présente des deux côtés de chaque dent (24) un évidement respectif (28) dont la largeur (b28) est approximativement égale à la largeur (b24) de la dent (24).

4. Disque articulé selon l'une quelconque des revendications 1 à 3, caractérisé en ce que deux pattes de support (30) font saillie depuis la bordure radialement extérieure de chaque disque annulaire (22), approximativement parallèlement à la douille associée (14), qui sont orientées vers une douille voisine respective (14).
